# EUROPEAN PATENT SPECIFICATION

(11) **EP 2 379 928 B1**
(45) Date of publication and mention of the grant of the patent: **17.04.2013**
(21) Application number: 10701403.7
(22) Date of filing: 12.01.2010
(51) Int. Cl.: F16L 37/091

(54) **PUSH-FIT PIPE CONNECTOR WITH IMPROVED GRIPPING ASSEMBLY**
STECKROHRVERBINDER MIT VERBESSERTER GREIFANORDNUNG
RACCORD RAPIDE POUR TUYAU AVEC ENSEMBLE DE RETENUE AMÉLIORÉ

(30) Priority: 12.01.2009 NL 1036410
(43) Date of publication of application: 26.10.2011
(73) Proprietor: Wavin B.V., 8011 CW Zwolle (NL)
(72) Inventor: BRISTOW, Adrian, David, North Yorkshire DN14 9PH (GB); BROOKMAN, Geert, NL-9491 AD Zeijen (NL); SUTCLIFFE, Steven, West Yorkshire WF2 0JZ (GB); FISHER, Raymond, South Yorkshire DN5 8TB (GB); FARDON, Mark, Notts NG20 9PP (GB)
(74) Representative: HOFFMANN EITLE
(86) International application number: PCT/NL2010/000002
(87) International publication number: WO 2010/080027

(56) References cited:
- EP-A1- 1 719 941
- WO-A1-2009/003016
- WO-A1-2009/024787
- DE-U1-202007 008 208
- GB-A- 2 321 685
- JP-A- 2005 180 654

## Description

The invention relates to a gripping assembly for use in a pipe connector of the push-fit type wherein the gripping assembly is arranged to retain an inserted pipe into the connector when said pipe is loaded. The invention furthermore relates to connectors equipped with such a gripping assembly.

Gripping assemblies are known for instance from JP2005180654. Figure 6 shows the known assembly with a pipe that has just been inserted, Figure 7 shows the same gripping assembly with the inserted pipe being loaded (in withdrawal direction). The gripping assembly comprises an annular gripping device with a V or saddle-shaped cross section, having inclined teeth extending radially inward and inclined legs extending radially outward. The assembly furthermore comprises a support structure, comprising a conical groove for accommodating the legs of the gripping device. The groove is defined between an inclined outer wall and an inclined inner wall, both having the same inclination angle. This angle is specified to be larger than that of the legs of the gripping device. In this description, the term 'inclined' is to be taken in reference to a centre axis of the connector.

Before insertion of a pipe, this known gripping device will rest with the tips of its legs against the inner inclined wall of the groove, having the tips of its teeth projecting into the passage way of the pipe. During insertion, the pipe will exert a torque on these teeth thereby causing them to deflect outward, that is out of the passage way of the pipe. At the same time, the gripping device will be dragged along in axial direction, causing the tips of the legs to run along and be urged outward by the inner wall, due to the fact that the inclination angle of this inner wall is larger than that of the legs.

A disadvantage of this known gripping assembly is that the deformation of the teeth and legs requires a relatively large insertion force. Also, the deformation energy built up in the gripping device will cause the teeth to be biased quite strongly against the outer surface of the pipe. This may cause the outer surface to become scratched, making it difficult to effect a leakproof seal around said surface, that is downstream of the gripping device (as seen in the insertion direction). As a result, the seal either has to be effected against an inner side of the pipe or against an outer side of the pipe, upstream of the gripping device. The first option (illustrated in the aforementioned prior art JP 2005180654) requires the connector to be equipped with an additional spigot to support the seal inside the pipe. Such internally sealing connector is not suitable for any type of pipe, for instance not for copper pipes. The second option (seal upstream of gripping device) may lead to installation errors. The pipe may be inserted not far enough, because the resistance of the seal ring may cause an installer to incorrectly assume that the joint has already been made. The pipe may subsequently blow out during use as it will not be properly retained by the gripping device.

It is an object of the present invention to provide a gripping assembly of the aforementioned type, wherein the disadvantages of the known gripping assembly are overcome or at least reduced. To that end a gripping assembly according to the invention is characterised in that a groove for accommodating the legs of the gripping device has a width that, seen in radial cross section, increases from an entrance side of the groove towards a base side of the groove.

Thanks to such configuration, the legs accommodated in the groove can rotate over a certain angle, thereby allowing the whole gripping device to rotate its orientation (i.e. around a tangential axis). Thus, when subjected to a torque upon insertion of a pipe, rather then being deformed or deflected, the teeth will (at least initially) be rotated out of the way. As rotating the gripping device will require a smaller force than deforming the teeth, the insertion force can be lowered. Also, the risk of the pipe being damaged by the teeth will be reduced, as the elastic deformation force that biases the teeth against the outer surface of the pipe will be much lower or absent all together. As a result, a seal can be arranged downstream of the gripping device, i.e. around a portion of the pipe that has passed the gripping device. This may prevent the aforementioned disadvantages associated with an upstream seal or an inner seal.

The widening of the groove may take place in any kind of way, for instance linear, progressive, degressive, etc..

According to a further aspect of the invention, the inner wall may be provided with a convexly curved or rounded edge at the entrance of the groove. Such edge can act as stopper for the gripping device in insertion direction and may further act as fulcrum. As a result, the stopping and/or rotation of the gripping device may occur at a fixed, predetermined position. As such, the behaviour of the gripping device during jointing of the pipe can be controlled, at least to some extent, which allows the remainder of the support structure (in particular the geometry of the groove) to be dimensioned to support and further guide the gripping device in a preferred direction.

According to another aspect of the invention, the outer wall extending beyond the groove may be provided with a concavely curved or rounded shoulder. This shoulder will act as stopper for the gripping device when the inserted pipe is loaded, thereby limiting travel of the pipe and gripping device in withdrawal direction. The shoulder may further act as fulcrum for the gripping device, allowing the device to rotate towards a position whereby the teeth bite deeper into the pipe.

Thanks to the specific shape of the shoulder, i.e. concavely curved, the gripping device will be stopped at a fixed, predetermined position regardless its exact orientation at that position (i.e. its rotation angle around the tangential axis) and regardless its deformation at that position (i.e. the size of its apex, determined by the extent to which its teeth and/or legs have been deflected inward or outward during the prior insertion and withdrawal process). This in contrast to for instance a V-shaped shoulder, like the one shown in the earlier mentioned prior art JP2005180654, wherein the exact stopping position and the subsequent rotation possibilities of the gripping device will depend very much on the momentaneous orientation and deformation of the gripping device as it reaches the shoulder. This momentaneous orientation and deformation of the gripping device may vary per instance, for example due to a tolerance band on the outer diameter of the pipes employed. For instance, with pipes of a relatively large outer diameter the teeth may have been deflected further by the time that the gripping device reaches the shoulder than with smaller pipes. As a consequence, the apex of the gripping device will be smaller and will be urged further into the V-shaped shoulder upon withdrawal of the pipe. This will not only cause the pipe's withdrawal to be stopped at a later position, but also will cause the gripping device to become wedged in the shoulder thereby giving it little opportunity to rotate to allow the teeth to increase their grip on the pipe. If proceeded too far into the shoulder, the legs of the gripping device may even become dislodged from the groove, which may be detrimental for the well functioning of the gripping device.

Thus, the geometry of the gripping assembly according to the invention interacts to allow the gripping device to perform properly, according to a predetermined scheme, and substantially independent of external variables such as manufacturing tolerances on the outer diameter of the pipe and/or variations in the loading conditions of the pipe. As a consequence, the gripping assembly can be designed to feature good insertion properties (e.g. a low insertion force, little scratching of the pipe surface, etc.) and good retention properties (e.g. an effective gripping force causing minimum damage and weakening of the pipe, limited penetration depth of the teeth, etc.).

Limitation of the penetration depth of the teeth can in the present invention be effected by controlling the maximum rotation angle of the gripping device. This in turn can be done by gearing the designs of the shoulder and groove to one another, wherein the shoulder can accurately establish the end position of the gripping device, as described above, and wherein the groove can subsequently determine the maximum allowable rotation angle of the device in said end position. Accordingly, the maximum rotation angle of the teeth can be accurately controlled and with that their penetration depth into the pipe. This may in particular be relevant for multilayer pipes, such as barrier pipes or metal plastic pipes. It may help to prevent the teeth from penetrating a certain layer, which otherwise would for instance jeopardize the integrity of the pipe or lead to electro-corrosion (in the case of a metal plastic pipe).

According to another aspect of the invention, the number of teeth of the gripping assemblies may be odd. Such odd number of teeth may facilitate axial alignment when inserting a pipe.

According to a further aspect of the invention the width of the teeth may be substantially equal to the width of the intervals between adjacent teeth, at least when measured at a pitch circle that corresponds to the outer circumference of a pipe which in use may be inserted in the gripping assembly, i.e. a pipe for which the gripping assembly is intended. (It is recalled that pipes generally come in standard diameters. Accordingly, pipe connectors and gripping assemblies come in standard sizes as well, in accordance with said standard pipe sizes.) With such design it is ensured that the width of the un-gripped pipe portions will be substantially equal to the width of the gripped portions of the pipe, resulting in a contact ratio of around 50% with advantages that will be discussed further below.

In this description the contact ratio is defined as the circumferential length over which a gripping assembly, in particular the teeth thereof, contact an inserted pipe, expressed as percentage of the total circumferential length of said pipe.

According to a further aspect of the invention, the gripping assembly may be used for jointing pipes of different outer diameter. In such case, the contact ratio of the respective gripping assemblies is preferably kept substantially constant over the entire diameter range. By doing so, the occurrence of a phenomenon called bite off" may be reduced, especially for pipes of relatively large outer diameter, e.g. of more than 20 mm.

It has been observed that prior art gripping assemblies tend to increase their contact ratio with the pipe diameter. For instance, for relatively small pipes the contact ratio may be around 40% whereas for larger pipes the contact ratio may be as high as 60% or more. Applicant has recognized that the ultimate strength of a gripped pipe is largely determined by the 'un-gripped' portions, i.e. the portions of the pipe extending between adjacent teeth of a gripping assembly. If these un-gripped portions become too small, the local stresses may reach a point where said portions start to yield, inevitably resulting in the pipe being 'bitten off'. Thus, by selecting a proper contact ratio and by keeping this ratio constant over the entire diameter range, a consistent integrity can be achieved across the entire diameter range. Of course, the susceptibility for the bite-off phenomenon may be influenced by other parameters, such as the wall thickness of the respective pipes, the material of the pipe and/or of the gripping assembly, the 'bite' depth of the gripping teeth, the overall load conditions to which the pipes are subjected, etc. Therefore, the optimum contact ratio may differ per range and intended application.

In generally, the preferred contact ratio will be higher than 30% to 40%, to ensure that the teeth will have sufficient strength and to obtain a sufficient total gripping force, and be lower than 60% to 70 %, to ensure that the un-gripped portions have sufficient strength to prevent bite off failure. A contact ratio of around 50% can provide optimum results, providing sufficient grip at the one hand, while safeguarding the pipe's integrity at the other hand.

It is noted that the term 'constant' must not be interpreted too limited. The term 'substantially' has been added to allow for a certain margin, for instance +/- 5%, to be taken into account with respect to a constant nominal value, because in practice the actual contact ratio may show some deviations from a nominal value, due to inevitable manufacturing tolerances, both on the connectors and gripping assemblies themselves as on the outer diameter of the pipes for which the connectors are intended.

The constant contact ratio may be effected by increasing the number of teeth with the outer diameter, while keeping their dimensions substantially constant. Alternatively, the dimensions of the teeth may be increased, while keeping the number of teeth the same across the entire diameter range. Of course, combinations are possible, whereby both the dimensions and the number of teeth are varied.

Further advantageous embodiments of a gripping assembly according to the invention, and connectors equipped therewith are set forth in the dependent claims.

To explain the invention, an exemplary embodiment thereof will hereinafter be described with reference to the accompanying drawings, wherein:
FIG. 1 shows a section through one embodiment of a connector with a gripping assembly according to the invention, wherein the gripping assembly is in a state ready to receive a pipe;
FIG. 2 shows a close up of the gripping assembly of Figure 1;
FIG. 3 shows in top plan view an embodiment of a gripping device for use in a gripping assembly according to the invention;
FIG. 4 shows the gripping device of Figure 3 in perspective view;
FIG. 5 shows a gripping assembly according to the invention in operation, the left hand side showing the gripping assembly just after insertion of a pipe, the right hand side showing the gripping assembly with the pipe being loaded in withdrawal direction;
FIG. 6 shows a prior art gripping assembly in a situation comparable to the left hand side of Figure 5, that is just after insertion of a pipe; and
FIG. 7 shows the prior art gripping assembly of Figure 6 in a situation comparable to the right hand side of Figure 5, that is with the inserted pipe being subjected to a withdrawal load.

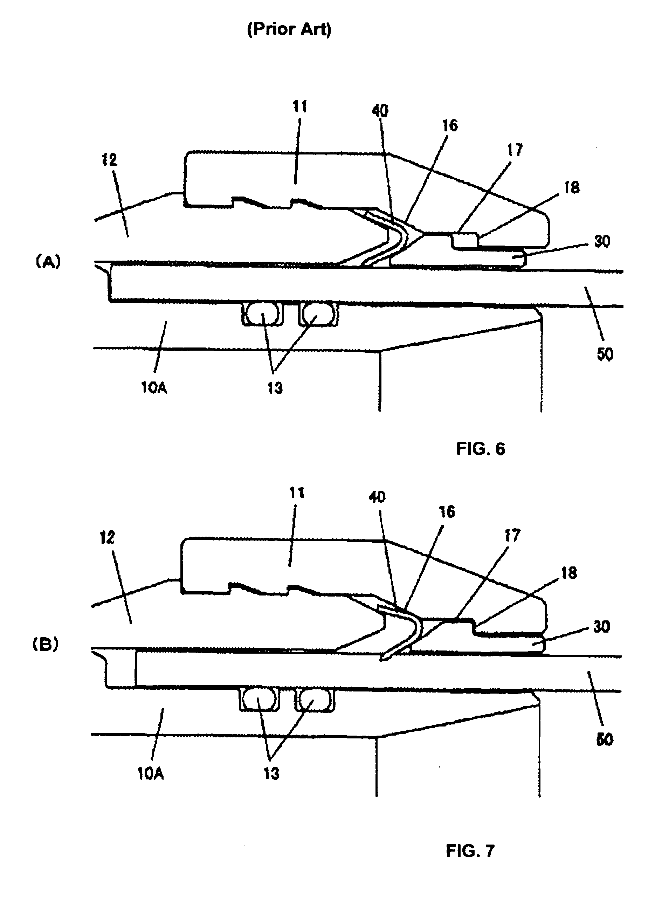

In this description, identical or corresponding parts have identical or corresponding reference numerals (except for the prior art embodiments shown in Figures 6 and 7).

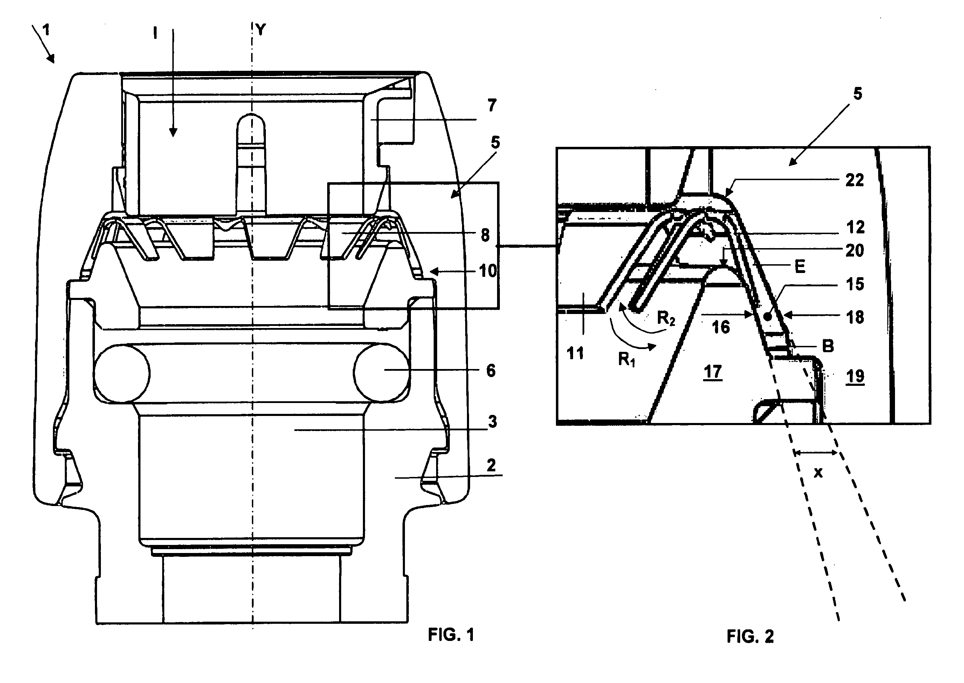

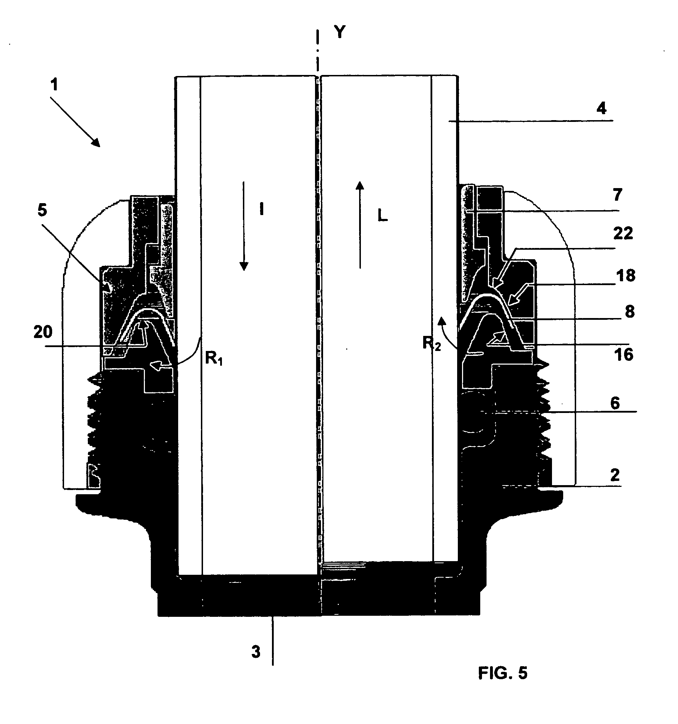

Figure 1 shows a push-fit connector 1 in accordance with the invention, comprising a socket 2 with a bore 3 for receiving a pipe 4 (depicted in Figure 5). The bore 3 is provided with a gripping assembly 5 and may further be provided with a seal 6 and/or a release collar 7.

The connector 1 may be formed at the end of a pipe or may be part of a fitting, such as for example a coupling or elbow for joining two lengths of pipe together, or a more complex fitting like a T-junction, a manifold or a valve. Some of these fittings will include other sockets and these may but need not have a similar structure to the one illustrated. The connector 1 and more particularly the socket 2 can be formed from a wide variety of materials, including various plastics (such as polybutylene) and metals (such as brass) and combinations thereof.

The seal 6 is adapted to effect a seal between the radially inner surface of the bore 3 and the radially outer surface of the pipe 4 when the pipe 4 is fully received within the bore 3. In the illustrated embodiment, the seal 6 is located downstream of the gripping assembly 5, seen in insertion direction I of the pipe 4. The specific shape and configuration of the seal 6 are not relevant to the invention and a wide variety of alternative seals could be used in its place.

As perhaps best seen in Figure 2, the gripping assembly 5 comprises a gripping device 8 and a support structure 10, both accommodated coaxially within the bore 3 of the socket 2.

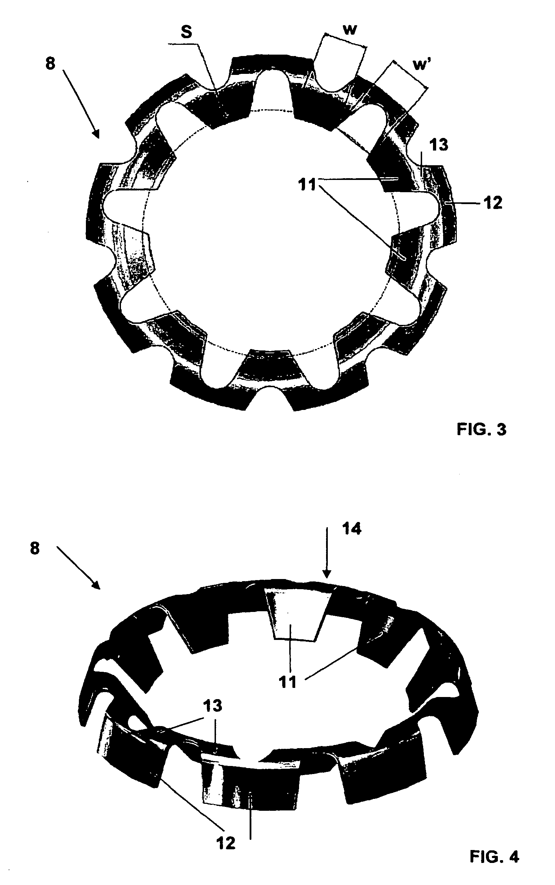

Figures 3 and 4 show an embodiment of a gripping device 8 according to the invention. The gripping device 8 has a substantially V-shaped cross section, with inclined teeth 11 extending radially inward and inclined legs 12 extending radially outward. The teeth 11 and legs 12 are interconnected by bent bridge portions 13, which together form the apex 14 of the gripping device 8. In this embodiment, the width w of the teeth 11 corresponds to the width w' of the intervals between adjacent teeth 11, when measured along a pitch circle S that corresponds to the outer diameter of a pipe end 4 for which the gripping device 8 is dimensioned. As a result, when inserting a pipe 4, the width w' of the un-gripped pipe portions will be substantially equal to the width w of the gripped portions, resulting in a beneficial contact ratio of around 50%. A further advantage is that these design rules can be readily transferred to other size gripping devices 8 for pipes of other diameters, allowing for a certain degree of standardisation across a diameter range. The gripping device 8 can be formed from a wide variety of materials, preferably flexible materials, such as a metal or various plastics or a combination thereof.

The support structure 10 comprises an annular groove 15 which is adapted to receive the legs 12 of the gripping device 8. The groove 15 is defined between an inner wall 16 and an outer wall 18. Both walls 16, 18 have a radius that decreases in a direction opposed to the insertion direction I of a pipe 4. The radius of the outer wall 18 decreases more, eventually, than that of the inner wall 16. Accordingly, the groove 15 has its maximum width X at its base B and its minimum width near its entrance E. Although in Figure 2 the walls 16 and 18 are shown to have an inclined, conical shape, in alternative embodiments, the decrease in radius may have a non-linear character. The inner wall 16 ends at the entrance E of the groove 15 in a convexly rounded edge 20. The outer wall 18 ends beyond the entrance E of the groove 15 in a concavely rounded shoulder 22.

In the illustrated embodiment, the inner wall 16 is formed by an outer flank of an annular seat 17 with a substantially triangular cross section. The outer wall 18 is formed by an inner surface of an enclosing cap 19 which forms part of the socket 2. Such modular configuration may provide manufacturing convenience. In alternative embodiments, the connector 1 and/or support structure 10 may be formed as a single integral piece or be made from components that are combined together in a different way.

Now, the operation of the gripping assembly 5 will be described, with reference to Figures 1, 2 and 5. As best seen in Figure 2, the inner wall 16 and the gripping device 8 are dimensioned such that whilst the gripping device 8 is unloaded, it rests with the tips of its legs 12 against a portion of the inner wall 16 located near the entrance E of the groove 15.

When a pipe 4 is being inserted into the bore 3, it will cause the gripping device 8 to move axially inward and to rotate around a tangential axis, in the direction indicated by arrow R₁. These movements may occur simultaneously or in succession (in no particular order). The rotation is caused by the pipe 4 exerting a torque on the teeth 11 and is made possible thanks to the widening shape of the groove 15, allowing the legs 12 to rotate radially outward (which in Figure 2 corresponds to an upward direction). During the axial movement of the gripping device 8, its legs 12 may run along the inclined surface of the inner wall 16, which may further encourage these legs 12 to rotate upward. The rotation causes the passage through the gripping device 8 to expand, thereby allowing the pipe 4 through with little resistance and with little risk of becoming scratched. The teeth 11 are essentially rotated rather than bent out of the passage way of the pipe 4. As this rotation will require less force than bending (deformation) the teeth 11, the pipe 4 can be inserted with little force.

When the pipe 4 has been fully inserted the gripping device 8 may rest with its apex on the rounded edge 20 of the inner wall 16. The teeth 11 will have been completely rotated out of the way of the pipe 4, wherein the last portion of this rotation may indeed be effected through elastic deformation.

This elastic deformation will cause the teeth 11 to be biased against the outer surface of the pipe 4, but with a reduced force. The legs 12 will have rotated upward until their tips abut the outer wall 18 of the assembly 5.

In use, the joint will be pressurized, causing the pipe 4 to be loaded in axial direction, as shown in the right hand side of Figure 5. This will urge the pipe 4 in a direction indicated by arrow L, dragging the gripping device 8 along until it abuts the shoulder 22. Upon further withdrawal of the pipe 4, the gripping device 8 may rotate in the direction of R2, using the shoulder 22 as fulcrum, thereby allowing the teeth 11 to bite deeper into the pipe 4 to increase their grip and effectively block further withdrawal of the pipe 4. Of course, rotation of the gripping device 8 may have already started prior to reaching the shoulder 22.

To release the pipe 4, the release collar 7 may be urged axially inward, into the bore 3, so as to have its leading edge act on the teeth 11. Further pressure inward will cause the teeth 11 to be disengaged from the pipe's outer surface thereby allowing the pipe 4 to be withdrawn from the bore 3. The connector 1 can then be reused.

The connector 1 may come in different sizes, to join pipes of different diameters, ranging for instance from 10 mm or less to 32 mm or more. These values are in no way to be construed as limiting the scope of protection. The connectors 1 are all equipped with a gripping assembly 5 as described, preferably with a contact ratio that is substantially constant over the entire diameter range.

For a discussion of further advantages of the operation and structural features of the gripping assembly 5 reference is made to the introductory part of this description.

The invention is not in any way limited to the exemplary embodiment presented in the description and drawing. All combinations (of parts) of the embodiment shown and described are explicitly understood to be incorporated within this description and are explicitly understood to fall within the scope of the invention. Moreover, many variations are possible within the scope of the invention, as outlined by the appended claims.

## Claims

1. Gripping assembly (5) for a push-fit pipe connector (1) for preventing an inserted pipe (4) from being withdrawn from the connector (1), the assembly (5) comprising a gripping device (8) and a support structure (10), said gripping device (8) having inclined teeth (11) extending radially inward, and inclined legs (12) extending radially outward, and the support structure (10) comprising an annular groove (15) for accommodating the legs (12) of the gripping device (8), wherein the groove (15) is formed between an outer wall (18) facing an outer side of the legs (12), and an inner wall (16) facing an inner side of the legs (12), and wherein a width (X) of the groove (15), seen in radial cross section, is narrow near an entrance (E) of the groove (15) and widens towards a base (B) of the groove (15).

2. Gripping assembly (5) according to claim 1, wherein the inner wall (16) at the entrance (E) of the groove ends in a convexly rounded edge (20).

3. Gripping assembly (5) according to claim 1 or 2, wherein the outer wall (18) extends beyond the groove (15) and continues in a concavely rounded shoulder (22), to serve as stopper and/ or fulcrum for the gripping device (8).

4. Gripping assembly (5) according to anyone of the preceding claims, wherein the support structure (10) comprises a seat (17) with a substantially triangular cross section, wherein a radial outer flank of this seat (17) forms the inner wall (16) of the groove (15).

5. Gripping assembly (5) according to anyone of the preceding claims, furthermore comprising a seal (6) located downstream of the gripping device (8), seen in insertion direction (I), for effecting a seal around the inserted pipe (4) and a surrounding connector (1).

6. Gripping assembly (5) according to anyone of the preceding claims, wherein the dimensions of the gripping device (8) and the inner wall (16) are such that the gripping device (8), in unloaded condition, rests with the tips of its legs (12) against a portion of the inner wall (16) that is located near the entrance (E) of the groove (15), at least nearer to the entrance (E) of the groove (15) than to the base (B).

7. Gripping assembly (5) according to anyone of the preceding claims, wherein the gripping device (8) has an odd number of teeth (11).

8. Gripping assembly (5) according to anyone of the preceding claims, wherein the teeth (11) of the gripping device (8) have a width (w) that is substantially equal to a width (w') of intervals between adjacent teeth (11), at least when measured at a pitch circle (S) that corresponds to the outer circumference of a pipe (4) which in use may be inserted in the gripping assembly (5).

9. Series of gripping assemblies (5) according to any one of the preceding claims for push-fit connectors (1) of different sizes, to accommodate a range of pipe diameters, wherein a contact ratio of each gripping assembly (5) is substantially constant across the diameter range, the contact ratio being defined as the circumferential length over which the gripping device (8) contacts an inserted pipe (4), expressed as percentage of the total circumferential length of the pipe in question.

10. Series of gripping assemblies (5) according to claim 9, wherein the value of the contact ratio is higher than around 30%, preferably higher than around 40% and lower than around 70%, preferably lower than around 60%, most preferably is around 50%.

11. Series of gripping assemblies (5) according to claim 9 or 10, wherein the value of the contact ratio across the diameter range deviates less than +/-5% of a nominal value.

12. Series of gripping assemblies (5) according to anyone of claims 9-11, wherein each gripping device (8) has the same number of teeth (11) across the diameter range.

13. Series of gripping assemblies (5) according to anyone of claims 9-12, wherein the number of teeth per gripping device (8) increases with the pipe diameter for which the respective gripping assemblies (5) are intended.

14. Push-fit pipe connector (1) comprising a socket (2) for receiving a pipe (4), and a gripping assembly (5) according to anyone of the preceding claims.

## Patentansprüche

1. Greifeinheit (5) für einen Rohrsteckverbinder (1) zum Verhindern, dass ein eingeführtes Rohr (4) aus dem Verbinder (1) herausziehbar ist, wobei die Einheit (5) eine Greifeinrichtung (8) und eine Stützeinrichtung (10) umfasst, und die Greifeinrichtung (8) geneigte Zähne (11), die sich radial nach innen erstrecken, und geneigte Beine (12), die sich radial nach außen erstrecken, aufweist und die Stützstruktur (10) eine ringförmige Fuge (15) zum Aufnehmen der Beine (12) der Greifeinrichtung (8) umfasst, wobei die Fuge (15) zwischen einer äußeren Wand (18), die in Richtung einer äußeren Seite des Beins (12) ausgerichtet ist, und einer inneren Wand (16), die in Richtung einer inneren Seite des Beins (12) ausgerichtet ist, ausgebildet ist, und wobei eine Breite (X) der Fuge (15), von einem radialen Querschnitt betrachtet, in der Nähe des Eintritts (E) der Fuge (15) schmal ist und sich in Richtung einer Basis (B) der Fuge (15) weitet.

2. Greifeinheit (5) nach Anspruch 1, wobei die innere Wand (16) am Eintritt (E) der Fuge in einer konvex gerundeten Kante (20) endet.

3. Greifeinheit (5) nach Anspruch 1 oder 2, wobei sich die äußere Wand (18) über die Fuge (15) erstreckt und in einen konkav gerundeten Absatz verläuft, um als Stopper und/oder Stützpunkt für die Greifeinrichtung (8) zu dienen.

4. Greifeinheit (5) nach einem der vorhergehenden Ansprüche, wobei die Stützstruktur (10) eine Auflagefläche (17) mit einem im Wesentlichen dreieckigen Querschnitt aufweist, wobei eine radiale äußere Flanke der Auflagefläche (17) die innere Wand (16) der Fuge (15) ausbildet.

5. Greifeinheit (5) nach einem der vorhergehenden Ansprüche, ferner umfassend eine Dichtung (6), die in Einführungsrichtung (I) der Greifeinrichtung (8) nachgelagert ist zum Ausbilden einer Dichtung um das eingeführte Rohr (4) und einen umgebenden Verbinder (1).

6. Greifeinheit (5) nach einem der vorhergehenden Ansprüche, wobei die Abmessungen der Greifeinrichtung (8) und der inneren Wand (16) so sind, dass die Greifeinrichtung (8) in einem ungeladenen Zustand mit den Spitzen ihrer Beine (12) an einem Bereich der inneren Wand (16), der in der Nähe des Eintritts (E) der Fuge (15), zumindest näher zu dem Eintritt (E) der Fuge (15), als die Basis (B), angeordnet ist, aufliegt.

7. Greifeinheit (5) nach einem der vorhergehenden Ansprüche, wobei die Greifeinrichtung (8) eine ungerade Anzahl von Zähnen (11) aufweist.

8. Greifeinheit (5) nach einem der vorhergehenden Ansprüche, wobei die Zähne (11) der Greifeinrichtung (8) eine Breite (w) aufweisen, die im Wesentlichen gleich einer Breite (w') von Intervallen zwischen benachbarten Zähnen (11) ist, zumindest wenn an einem Teilkreis (S), der dem äußeren Umfang eines Rohrs (4), welches bei Verwendung in die Greifeinheit (5) eingeführt werden kann, gemessen.

9. Reihe aus Greifeinheiten (5) nach einem der vorhergehenden Ansprüche für Steckverbinder (1) verschiedener Größen zum Aufnehmen eines Bereiches von Rohrdurchmessern, wobei ein Kontaktverhältnis von jeder Greifeinheit (5) im Wesentlichen konstant über den Durchmesserbereich ist und das Kontaktverhältnis als die Umfangslänge, über welche die Greifeinrichtung (8) ein eingeführtes Rohr (4) berührt, definiert ist und als Prozent der Gesamtumfangsfläche des betrachteten Rohrs ausgedrückt wird.

10. Reihe aus Greifeinheiten (5) nach Anspruch 9, wobei der Kontaktverhältniswert höher als etwa 30%, vorzugsweise höher als etwa 40% und tiefer als 70%, vorzugsweise tiefer als 60%, besonders bevorzugt um 50% ist.

11. Reihe aus Greifeinheiten (5) nach Anspruch 9 oder 10, wobei der Kontaktverhältniswert über den Durchmesserbereich weniger als ± 5% von einem Nennwert abweicht.

12. Reihe aus Greifeinheiten (5) nach einem der Ansprüche 9 bis 11, wobei jede Greifeinrichtung (8) über den Durchmesserbereich die gleiche Anzahl von Zähnen aufweist.

13. Reihe aus Greifeinheiten (5) nach einem der Ansprüche 9 bis 12, wobei die Anzahl von Zähnen pro Greifeinrichtung (8) mit dem Rohrdurchmesser, für den die entsprechenden Greifeinheiten (5) vorgesehen sind, ansteigt.

14. Rohrsteckverbinder (1), der eine Aufnahme (2) zum Aufnehmen eines Rohrs (4) aufweist, und eine Greifeinheit (5) nach einem der vorhergehenden Ansprüche umfasst.

## Revendications

1. Ensemble de retenue (5) pour un raccord de tuyau par emboîtement en poussée (1) pour empêcher un tuyau inséré (4) de sortir du raccord (1), l'ensemble (5) comprenant un dispositif de retenue (8) et une structure de support (10), ledit dispositif de retenue (8) ayant des dents (11) inclinées s'étendant radialement vers l'intérieur, et des jambes (12) inclinées s'étendant radialement vers l'extérieur, et la structure de support (10) comprenant une rainure annulaire (15) pour recevoir les jambes (12) du dispositif de retenue (8), dans lequel la rainure (15) est formée entre une paroi extérieure (18) faisant face à un côté extérieur des jambes (12), et une paroi intérieure (16) faisant face à un côté intérieur des jambes (12), et dans lequel une largeur (X) de la rainure (15), vue en une coupe radiale, est étroite près d'une entrée (E) de la rainure (15) et s'élargit en direction d'une base (B) de la rainure (15).

2. Ensemble de retenue (5) selon la revendication 1, dans lequel la paroi intérieure (16) au niveau de l'entrée (E) de la rainure se termine en un bord (20) arrondi de manière convexe.

3. Ensemble de retenue (5) selon la revendication 1 ou la revendication 2, dans lequel la paroi extérieure (18) s'étend au-delà de la rainure (15) et se poursuit en un épaulement (22) arrondi de manière concave, pour servir de butée et /ou de point d'appui pour le dispositif de retenue (8).

4. Ensemble de retenue (5) selon l'une quelconque des revendications précédentes, dans lequel la structure de support (10) comprend un siège (17) ayant une section transversale sensiblement triangulaire, un flanc extérieur radial de ce siège (17) formant la paroi intérieure (16) de la rainure (15).

5. Ensemble de retenue (5) selon l'une quelconque des revendications précédentes, comprenant en outre un joint d'étanchéité (6) placé en aval du dispositif de retenue (8), vu dans une direction d'insertion (I), pour créer une étanchéité autour du tuyau inséré (4) et d'un raccord (1) l'entourant.

6. Ensemble de retenue (5) selon l'une quelconque des revendications précédentes, dans lequel les dimensions du dispositif de retenue (8) et de la paroi intérieure (16) sont telles que le dispositif de retenue (8), dans un état sans charge, se trouve avec les extrémités de ses jambes (12) contre une portion de la paroi intérieure (16) qui est située près de l'entrée (E) de la rainure (15), au moins plus près de l'entrée (E) de la rainure (15) que de la base (B).

7. Ensemble de retenue (5) selon l'une quelconque des revendications précédentes, dans lequel le dispositif de retenue (8) a un nombre impair de dents (11).

8. Ensemble de retenue (5) selon l'une quelconque des revendications précédentes, dans lequel les dents (11) du dispositif de retenue (8) ont une largeur (w) qui est sensiblement égale à une largeur (w') des intervalles entre des dents (11) adjacentes mesurée au moins sur un cercle primitif (S) qui correspond à la circonférence extérieure d'un tuyau (4) qui, lors de l'utilisation, peut être inséré dans l'ensemble de retenue (5).

9. Série d'ensembles de retenue (5) selon l'une quelconque des revendications précédentes pour des raccords par emboîtement en poussée (1) de différentes tailles, pour recevoir une gamme de diamètres de tuyaux, dans laquelle un rapport de contact de chaque ensemble de retenue (5) est sensiblement constant sur toute la gamme de diamètres, le rapport de contact étant défini comme la longueur périphérique sur laquelle le dispositif de retenue (8) est en contact avec un tuyau inséré (4), exprimé par un pourcentage de la longueur périphérique totale du tuyau en question.

10. Série d'ensembles de retenue (5) selon la revendication 9, dans laquelle la valeur du rapport de contact est supérieure à 30% environ, de préférence supérieure à 40% environ et inférieure à 70% environ, de préférence inférieure à 60% environ, mieux encore est de 50% environ.

11. Série d'ensembles de retenue (5) selon la revendication 9 ou la revendication 10, dans laquelle la valeur du rapport de contact sur toute la gamme de diamètres s'écarte de moins de +/- 5% d'une valeur nominale.

12. Série d'ensembles de retenue (5) selon l'une quelconque des revendications 9 à 11, dans laquelle chaque dispositif de retenue (8) a le même nombre de dents (11) sur toute la gamme de diamètres.

13. Série d'ensembles de retenue (5) selon l'une quelconque des revendications 9 à 12, dans laquelle le nombre de dents par dispositif de retenue (8) augmente avec le diamètre du tuyau pour lequel les ensembles de retenue (5) respectifs sont conçus.

14. Raccord de tuyau par emboîtement en poussée (1) comprenant une embase (2) pour recevoir un tuyau (4), et un ensemble de retenue (5) selon l'une quelconque des revendications précédentes.
